# EUROPEAN PATENT SPECIFICATION

(11) **EP 1 998 547 B1**
(45) Date of publication and mention of the grant of the patent: **23.04.2014**
(21) Application number: 08251898.6
(22) Date of filing: 30.05.2008
(51) Int. Cl.: H04N 1/21, H04N 1/00

(54) **Imaging apparatus and method and computer program product for display of a number of still images and a time length of moving pictures still recordable on a recording medium**
Vorrichtung und Verfahren zur Bildgebung sowie Computerprogrammprodukt zur Anzeige von einer Zahl von unbewegten Bildern und eine Zeitspanne von bewegten Bildern, die noch auf einem Aufzeichnungsmedium passen
Appareil et procédé d'imagerie, et produit de programme informatique pour afficher un nombre d'images fixes et une durée d'images en mouvement qui peuvent encore être enregistrés sur un support d'enregistrement

(30) Priority: 30.05.2007 JP 2007142906
(43) Date of publication of application: 03.12.2008
(73) Proprietor: Fujifilm Corporation, Minato-ku Tokyo (JP)
(72) Inventor: Sato, Tsuneo, Miyagi (JP)
(74) Representative: Stevens, Jason Paul

(56) References cited:
- JP-A- 2005 318 261
- JP-A- 2007 028 581
- US-A- 5 905 528
- US-A1- 2001 048 472
- US-A1- 2001 050 875
- US-A1- 2002 065 841
- US-A1- 2004 189 823

## Description

### BACKGROUND OF THE INVENTION

### Field of the Invention

The present invention relates to an imaging apparatus for obtaining a still picture and a moving picture by imaging, such as a digital camera and the like, and an imaging method for use with the apparatus. The invention also relates to a computer program product for causing a computer to perform the imaging method.

### Description of the Related Art

Digital cameras have the ability to take moving pictures, as well as the ability to take still pictures, and as the capacity of recording media is increased, it has become possible to take moving pictures more freely and easily. In such digital cameras, still pictures and moving pictures are recorded on the same recording medium. Consequently, in order to improve user convenience, a digital camera that indicates, in an easily recognizable manner, a recordable time of moving pictures and a recordable number of still pictures calculated from a remaining recording capacity of a recording medium is proposed as described, for example, in Japanese Unexamined Patent Publication No. JP-A-2001-069422 (Patent Document 1). Another type of digital camera in which a recordable time of moving pictures or a recordable number of still pictures is updated every time a still picture or a moving picture is recorded on the recording medium is also proposed as described, for example, in Japanese Unexamined Patent Publication No. JP-A-2005-318261 (Patent Document 2).

The size of a moving picture is very large in comparison with that of a still picture. Accordingly, in the digital camera described in Patent Document 1 or Patent Document 2, if a long moving picture is taken, there may be a case in which, when trying to take a still picture, the still picture can not be recorded on the recording medium due to lack of free capacity.

Consequently, still another type of digital camera in which the moving picture recording area is limited when a still picture is taken, in order to ensure the recording area for recording still pictures in a recording medium, is proposed as described, for example, in Japanese Unexamined Patent Publication No. JP-A-2005-295138 (Patent Document 3) .

Contrary to Patent Document 1 and Patent Document 2, in the digital camera described in Patent Document 3, when many still pictures are taken, there may be a case in which a moving picture can not be recorded on the recording medium. In particular, the size of each still picture differs depending on the number of recording pixels, imaging conditions, and the like. Thus, if the capacity of the recording medium is constant, the recordable number of still pictures differs depending on the number of recording pixels, imaging condition, and the like.

The present invention has been developed in view of the circumstances described above, and it is an object of the present invention to ensure an appropriate recording time of a moving picture while appropriately ensuring a recording number of still pictures.

### SUMMARY OF THE INVENTION

The imaging apparatus of the present invention is an apparatus having an imaging means for obtaining a still picture and a moving picture by imaging, a removably attachable recording medium for recording the still picture and the moving picture, and a display means for displaying a variety of information, the apparatus including:
a number and time setting means for setting a still picture recordable capacity, which is a recordable capacity for still pictures, and a moving picture recordable capacity, which is a recordable capacity for moving pictures, on the recording medium, based on a free capacity of the recording medium and on one of the number of recording pixels, image quality, imaging mode, and imaging condition of the still image, and calculating a recordable number of still pictures on the recording medium based on the still picture recordable capacity and a recordable time of a moving picture on the recording medium based on the moving picture recordable capacity; and
a display control means for displaying the recordable number of still pictures and the recordable time of a moving picture on the display means;
an information attaching means for attaching, when a still picture is imaged while imaging a moving picture, still picture imaged information to the moving picture, which indicates that a still picture is imaged during the imaging of the moving picture;
a recording control means for overwriting still pictures or moving pictures recorded on the recording medium with newly obtained still pictures or moving pictures respectively, in the chronological order of acquisition, when the recording size of a still picture obtained by imaging on the recording medium exceeds the still picture recordable capacity, or the recording size of a moving picture obtained by imaging on the recording medium exceeds the moving picture recordable capacity; and
said recording control means may be a means for protecting the overwriting of a moving picture having the still picture imaged information attached thereto among those recorded on the recording medium from being overwritten.

In the imaging apparatus of the present invention, the number and time setting means may be a means for displaying a plurality of different combinations of recordable capacity for still pictures and for moving pictures on the display means, and setting the still picture recordable capacity and the moving picture recordable capacity corresponding to a combination selected from the plurality of different combinations.

The recording control means may be a means for issuing an alert and terminating the imaging of the moving picture if an overwriting target moving picture has the still picture imaged information attached thereto when overwriting moving pictures recorded on the recording medium in the chronological order of acquisition.

The term "attaching still picture imaged information" as used herein means that the still picture and the moving picture are indivisibly combined with each other. The still picture imaged information may be attached by describing the still picture imaged information in the header of the image data of the moving picture, by associating the moving picture with a file such as a text file describing the still picture imaged information, or by creating a moving picture database and registering the still picture imaged information to the database.

The term "alert" as used herein means may be an alert displayed on the display means, a voice alert, or a combination thereof.

The present invention may also be embodied as an imaging method or as a computer program product for causing a computer to perform the method.

According to the present invention, a still picture recordable capacity, which is a recordable capacity for the still picture, and a moving picture recordable capacity, which is a recordable capacity for the moving picture, on the recording medium are set according to at least one of the number of recording pixels, image quality, imaging mode, and imaging condition of the still image, and a recordable number of still pictures on the recording medium and a recordable time of a moving picture on the recording medium are calculated based respectively on the still picture recordable capacity and the moving picture recordable capacity. Thereafter, the recordable number of still pictures and the recordable time of a moving picture are displayed on the display means.

Consequently, both the recordable number of still pictures and the recordable time of a moving picture may be set appropriately according to at least one of the number of recording pixels, image quality, imaging mode, and imaging condition of a still picture which will affect the size thereof. Further, the user may easily understand the recordable number of still pictures and the recordable time of a moving picture by checking the displayed recordable number of still pictures and the recordable time of a moving picture.

The user may set the recordable capacities for the still picture and the moving picture in a desired manner by displaying a plurality of types of patterns with respect to the still picture recordable capacity and the moving picture recordable capacity, and setting the still picture recordable capacity and the moving picture recordable capacity corresponding to a pattern selected from the plurality of types of patterns.

Further, even when the recorded size of a still picture obtained by imaging on the recording medium exceeds the still picture recordable capacity or the recorded size of a moving picture obtained by imaging on the recording medium exceeds the moving picture recordable capacity, imaging of a moving picture may be continued by overwriting still pictures or moving pictures recorded on the recording medium with newly obtained still pictures or moving pictures in the chronological order of acquisition, although old still pictures and moving pictures are lost.

In the mean time, the fact that a still picture is imaged while imaging a moving picture means that the moving picture is, in most cases, important to the user. Therefore, when a still picture is imaged while imaging a moving picture, the important moving picture may be protected from being lost through overwriting by attaching still picture imaged information indicating that a still picture is imaged during the imaging to the imaged moving picture, then when overwriting moving images in the chronological order of acquisition, if the still picture imaged information is attached to an overwriting target moving picture, displaying an alert message and terminating the imaging.

Further, when a still picture is imaged while imaging a moving picture, the important moving picture may be protected from being lost through overwriting by attaching still picture imaged information indicating that a still picture is imaged during the imaging to the imaged moving picture, and inhibiting the overwriting of a moving picture having the still picture imaged information attached thereto among those recorded on the recording medium.

### BRIEF DESCRIPTION OF THE DRAWINGS

Figure 1 is a schematic block diagram of a digital camera to which an imaging apparatus according to an embodiment of the present invention is applied, illustrating the internal configuration thereof.
Figure 2 illustrates a table in which numbers of recording pixels are associated with still picture recordable capacities and moving picture recordable capacities.
Figure 3 illustrates a table in which image qualities are associated with still picture recordable capacities and moving picture recordable capacities.
Figure 4 illustrates a table in which different numbers of recording pixels are associated with calculated recordable numbers and recordable times.
Figure 5 illustrates a table in which different image qualities are associated with calculated recordable numbers and recordable times.
Figure 6 illustrates a table in which various imaging modes, are associated with calculated recordable numbers and recordable times.
Figure 7 illustrates a table in which various imaging conditions are associated with calculated recordable numbers and recordable times.
Figure 8 illustrates a monitor on which a recordable number and a recordable time are displayed.
Figure 9 illustrates a table in which a plurality of different still picture recordable numbers and moving picture recordable times are associated with a number of recording pixels of 2M.
Figure 10 is a flowchart illustrating processing performed in the present embodiment.
Figure 11 is a flowchart of overwriting processing according to the present embodiment.
Figure 12 illustrates a monitor screen on which a remaining imageable time is displayed.
Figure 13 is a flowchart of first overwriting processing using still picture imaged information.
Figure 14 illustrates a monitor screen on which an alert message indicating termination of imaging is displayed.
Figure 15 schematically illustrates a moving picture recording area of a recording medium.
Figure 16 is a flowchart of second overwriting processing using still picture imaged information.
Figure 17 schematically illustrates a moving picture recording area of a recording medium.

### DESCRIPTION OF THE PREFERRED EMBODIMENTS

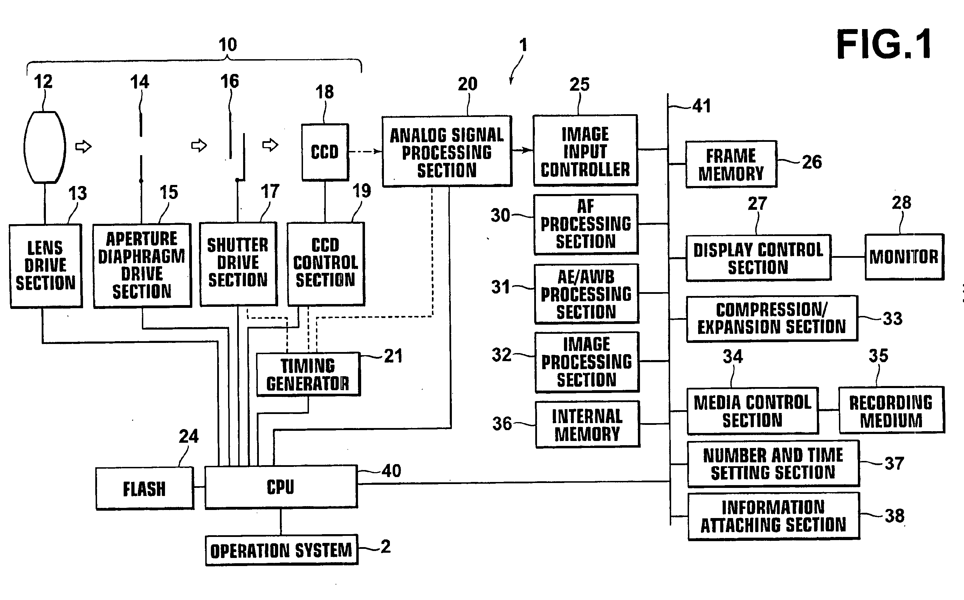

Hereinafter, an exemplary embodiment of the present invention will be described with reference to the accompanying drawings. Figure 1 is a schematic block diagram of a digital camera to which an imaging apparatus according to an embodiment of the present invention is applied, illustrating the internal configuration thereof. As shown in Figure 1, the digital camera 1 according to the present embodiment includes an operation system 2 having a release button, a mode dial and the like.

An imaging system 10 has a taking lens 12 which includes a focus lens and a zoom lens. The focus lens and the zoom lens constituting the taking lens 12 are movable in the optical axis directions by a lens drive section 13.

An aperture diaphragm 14 is driven by an aperture diaphragm drive section 15. The aperture diaphragm drive section 15 controls the diameter of the aperture diaphragm based on aperture value data outputted from an AE /AWB control section 31.

A shutter 16 is a mechanical shutter and is driven by a shutter drive section 17. The shutter drive section 17 performs open/close control of the shutter 16 according to a signal generated when the release button is depressed and shutter speed data outputted from the AE/AWB control section 31.

A CCD 18, which is an image sensor, is provided on the rear side of the shutter 16. The CCD 18 has a photoelectric surface that includes multitudes of light receiving elements disposed two-dimensionally, and the light representing a subject image transmitted through an optical system including the taking lens 12 is focused on the photoelectric surface and subjected to a photoelectric conversion. In front of the photoelectric surface, a micro-lens array for focusing light on each pixel and a color filter array in which R, G, and B color filters are arranged regularly are disposed. The CCD 18 outputs charges stored in the respective pixels line by line as serial analog image signals in synchronization with a vertical transfer clock signal and a horizontal transfer clock signal supplied from a CCD control section 19. The charge storage time of each pixel, that is, exposure time is determined by an electronic shutter drive signal supplied from the CCD control section 19. The CCD 18 is gain-adjusted by the CCD control section 19 so that an analog image signal having a predetermined level is obtained.

An analog image signal picked up by the CCD 18 is inputted to an analog signal processing section 20. The analog signal processing section 20 includes: a correlated double sampling circuit (CDS) for removing noise from the analog signal; an automatic gain controller (AGC) for controlling the gain of the analog signal; and an A/D converter (ADC) for converting the analog signal to a digital signal. Hereinafter, processing performed by the analog signal processing section 20 is referred to as "analog signal processing". The image data converted to digital signal are CCD-RAW data in which each pixel has R, G, B density values.

A timing generator 21 is a generator that generates timing signals, which are inputted to the shutter drive section 17, CCD control section 19, and analog signal processing section 20, thereby operation of the release button, open/close of the shutter 16, charge acquisition of the CCD 18, and the processing of the analog signal processing section 20 are synchronized.

The digital camera 1 further includes a flash 24 that emits flash light when required at the time of imaging.

An image input controller 25 writes the CCD-RAW data, inputted from the analog signal processing section 20, into a frame memory 26.

The frame memory 26 is a work memory used when various types of image processing (signal processing), to be described later, are performed on the image data, and constituted, for example, by a SDRAM (Synchronous Dynamic Random Access Memory) that performs data transfer in synchronization with a bus clock signal having a constant frequency.

A display control section 27 is a control section for causing a monitor 28 to display the image data stored in the frame memory 26 as through images, or to display a still picture or a moving picture stored in the recording medium 35 when in playback mode. As will be described later, it also causes the monitor 28 to display a still picture recordable number and a moving picture recordable time.

The AF processing section 30 and AE/AWB processing section 31 determine an imaging condition based on a pre-image. The pre-image is an image based on the image data stored in the frame memory 26 as a result of pre-imaging performed by the CCD 18, which is caused by the CPU 40 that has detected a halfway depression signal generated when the release button is depressed halfway.

The AF processing section 30 detects a focus position based on the pre-image, and outputs focus drive amount data (AF processing). As for the focus position detection method, for example, a passive method may be used, which makes use of the fact that the contrast becomes high when a desired subject is focused.

The AE/AWB processing section 31 measures subject brightness based on the pre-image, determines ISO sensitivity, aperture value, shutter speed, and the like, and determines the ISO sensitivity data, aperture value data, and shutter speed data as an exposure setting value(AE control), as well as automatically adjusting the white balance at the time of imaging (AWB control).

The image processing section 32 performs image quality control on the image data of a final image including tone correction, sharpness correction, color correction and the like, and YC processing in which CCD-RAW data are converted to YC data constituted by Y data (luminance signal data), Cb data (blue color difference signal data), and Cr data (red color difference signal data). The term "final image" as used herein means an image based on image data picked up by the CCD 18 through a main imaging performed when the release button is fully depressed and stored in the frame memory 26 via the analog signal processing section 20 and the image input controller 25. The image processing section 32 also performs required processing on the image data of a moving picture.

A compression/expansion section 33 generates an image file, by performing, for example, JPEG format compression on the image data of a final image processed/converted by the image processing section 32. A tag that includes auxiliary information, such as the date and time of imaging, and the like stored based on, for example, Exif format or the like, is attached to the image file. When imaging is performed in the moving picture mode, the compression/expansion section 33 generates an image file of the moving picture by compressing the image data of the moving picture by motion JPEG, MPEG-1, MPEG-2, MPEG-4, H.264, or the like.

The media control section 34 gains access to the recording medium 35 removably inserted in a not shown slot to control read/write operations of image files. Further, the media control section 34 obtains a capacity of the recording medium 35.

Further, as will be described later, if the recording size of the entire moving picture obtained by imaging on the recording medium 35 exceeds the moving picture recordable capacity, the media control section 34 overwrites old moving pictures with newly obtained moving pictures in the chronological order of acquisition. Here, the media control section 34 controls how to perform the overwriting depending on whether or not still picture imaged information is attached to the moving picture. The overwriting processing will be described later. It is noted that the overwriting processing is performed only when the operation mode of the digital camera 1 is set to overwriting mode, and if not, the imaging is terminated without performing the overwriting processing.

An internal memory 36 stores various constants to be set within the digital camera 1, a program to be performed by the CPU 40, and the like.

A number and time setting section 37 sets a still picture recordable capacity, which is the capacity recordable of a still picture, and a moving picture recordable capacity, which is the capacity recordable of a moving picture, on the recording medium 35 according to at least one of the number of recording pixels, image quality, imaging mode, and imaging condition of the still picture. In the present embodiment, the internal memory 36 includes therein various tables in which different number of recording pixels, image qualities, imaging modes, and imaging conditions are associated with still picture recordable capacities and moving picture recordable capacities are associated, and the number and time setting section 37s sets the still picture recordable capacity and moving picture recordable capacity according to at least one of the number of recording pixels, image quality, imaging mode, and imaging condition set by a user by referring to the table. In this way, the recording area of the recording medium 35 is divided into a recording area of a still picture and a recording area of a moving picture through setting of the still picture recordable capacity and moving picture recordable capacity.

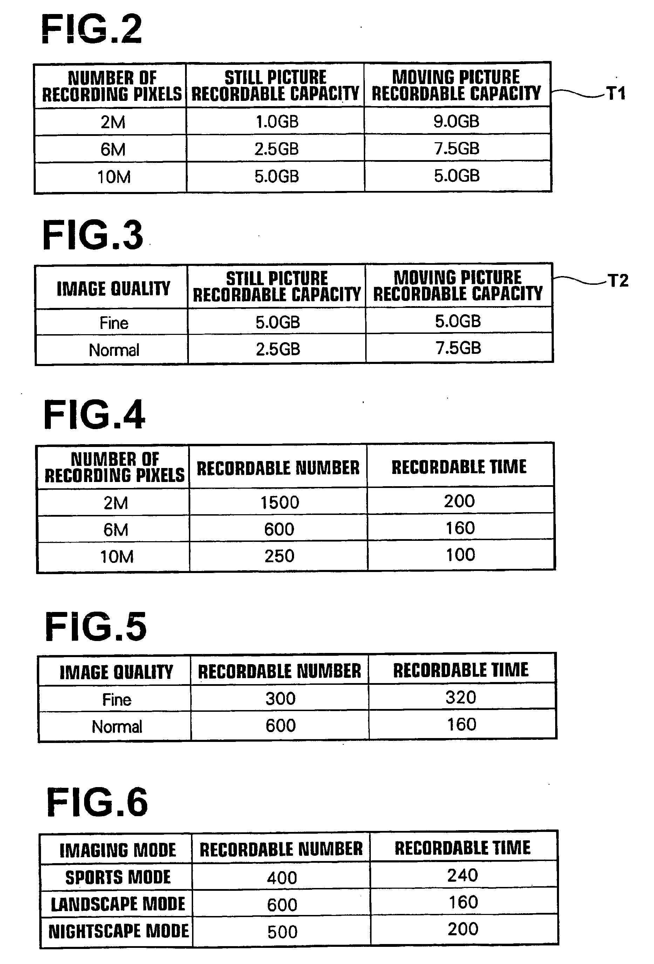

Figure 2 illustrates a table in which numbers of recording pixels are associated with still picture recordable capacities and moving picture recordable capacities. As shown in Figure 2, the table T1 associates each of 2M (two million pixels), 6M (six million pixels), and 10M (ten million pixel) that can be set in the digital camera 1 with each still picture recordable capacity and each moving picture recordable capacity.

Figure 3 illustrates a table in which image qualities are associated with still picture recordable capacities and moving picture recordable capacities. As shown in Figure 3, the table T2 associates each of "Fine" and "Normal", which are image qualities that can be set in the digital camera 1, with each still picture recordable capacity and each moving picture recordable capacity. The table T2 is a table that associates the image qualities when the number of recording pixels is, for example, set to 6M with still picture recordable capacities and moving picture recordable capacities. Tables associating the image qualities when numbers of recording pixels are 2M and 10M respectively with still picture recordable capacities and moving picture recordable capacities are also provided and stored in the internal memory 36.

For imaging modes, each of "Sports Mode", "Landscape Mode", and "Nightscape Mode" which can be set in the digital camera 1 is associated with each still picture recordable capacity and each moving picture recordable capacity. For imaging conditions, each of "AF Priority" and "AE Priority" which can be set in the digital camera 1 is associated with each still picture recordable capacity and each moving picture recordable capacity. These tables are also stored in the internal memory 36, and the number and time setting section 37 sets the still picture recordable capacity and moving picture recordable capacity according to the imaging mode and imaging condition by referring to these tables.

For the table associating the imaging modes with still picture recordable capacities and moving picture recordable capacities, and the table associating the imaging conditions with still picture recordable capacities and moving picture recordable capacities, different tables are provided according to the various number of recording pixels and image qualities, and stored in the internal memory 36.

The number and time setting section 37 further calculates a recordable number of still pictures on the recording medium 35 based on the determined still picture recordable capacity, and recordable time of a moving picture on the recording medium based on the determined moving picture recordable capacity. More specifically, the recordable number is calculated by dividing the determined still picture recordable capacity with an average size of still pictures according to the number of recording pixels, and the recordable time is calculated by dividing the determined moving picture recordable capacity with the bit rate of a moving picture. Figures 4 to 7 shows tables in which different numbers of recording pixels, image qualities, imaging modes, and imaging conditions are associated with calculated recordable numbers and recordable times.

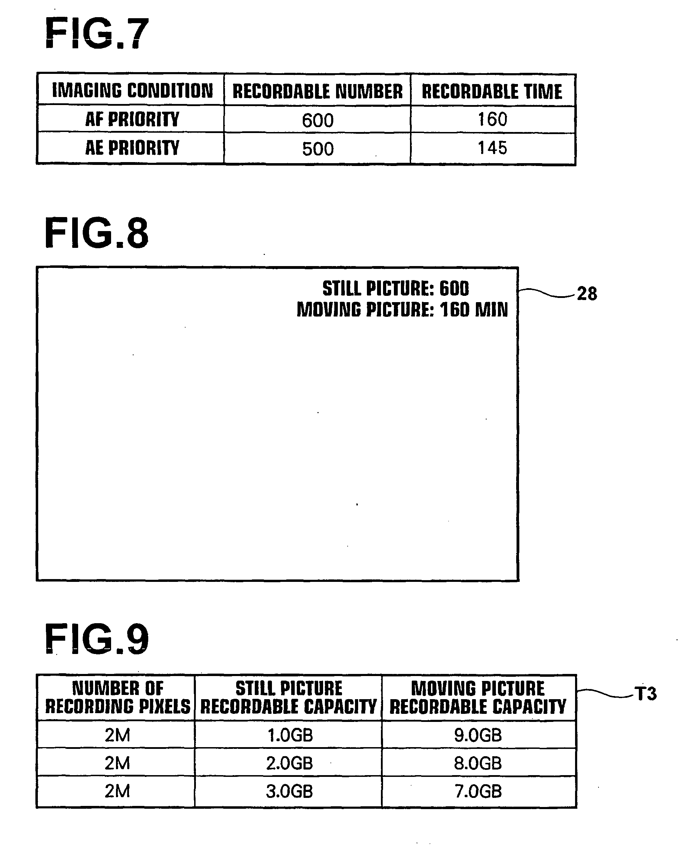

Then, the display control section 27 causes the monitor 28 to display the recordable number and recordable time calculated by the number and time setting section 37. Figure 8 illustrates the monitor 28 on which the recordable number and recordable time are displayed. As shown in Figure 8, the recordable number of still pictures (600) and the recordable time of a moving picture (160 min) are displayed on the upper right corner of the monitor 28.

The number and time setting section 37 sets the still picture recordable capacity and moving picture recordable capacity according to at least one of the number of recording pixel, image quality and imaging condition by referring to the table. But an arrangement may be adopted in which tables associating a plurality of still picture recordable capacities and moving picture recordable capacities are associated with single number of recording pixels, image quality, imaging mode, and imaging condition are provided and stored in the internal memory, and having the user select a desired still picture recordable capacity and a moving picture recordable capacity. Figure 9 illustrates a table in which a plurality of still picture recordable capacities and a plurality of moving picture recordable capacities are associated with a number of recording pixels of 2M.

If the number of recording pixels set by the user is 2M at the time when setting the still picture recordable capacity and moving picture recordable capacity, the number and time setting section 37 displays the table T3 shown in Figure 9 on the monitor 28. Then, desired still picture recordable capacity and moving picture recordable capacity are selected by the user using the operation system 2. Based on the still picture recordable capacity and moving picture recordable capacity selected by the user, the number and time setting section 37 calculates a recordable number and a recordable time.

It is also possible to have the user directly input values of the still picture recordable capacity and moving picture recordable capacity without displaying the table.

Here, the digital camera 1 according to the present embodiment may take a still picture and a moving picture, and record them on the recording medium 35. In addition, it has the ability to take a still picture while taking a moving picture. If a still picture is imaged while taking a moving picture, still picture imaged information, indicating that a still picture is imaged while taking the moving picture, is attached to the moving picture by an information attaching section 38. More specifically, the still picture imaged information is attached to the moving picture by describing the still picture imaged information in the header of the moving picture. Alternatively, the still picture imaged information may be attached to the moving picture by associating the moving picture with a file such as a text file describing the still picture imaged information, or by creating a moving picture database and registering the still picture imaged information to the database.

The CPU 40 controls each section of the main body of the digital camera 1 in response to the signals from various sections, including the operation system 2, AF control section 30 and the like. When a recording medium 35 is set in the digital camera 1, the CPU 40 further controls each section of the digital camera 1, including the display control section 27, media control section 34 and number and time setting section 37 such that the recordable number of still pictures and recordable time of a moving picture are calculated and displayed on the monitor 28.

A data bus 41 is connected to each of the processing sections, frame memory 26, CPU 40 and the like, and image data, various instructions and the like are exchanged therethrough.

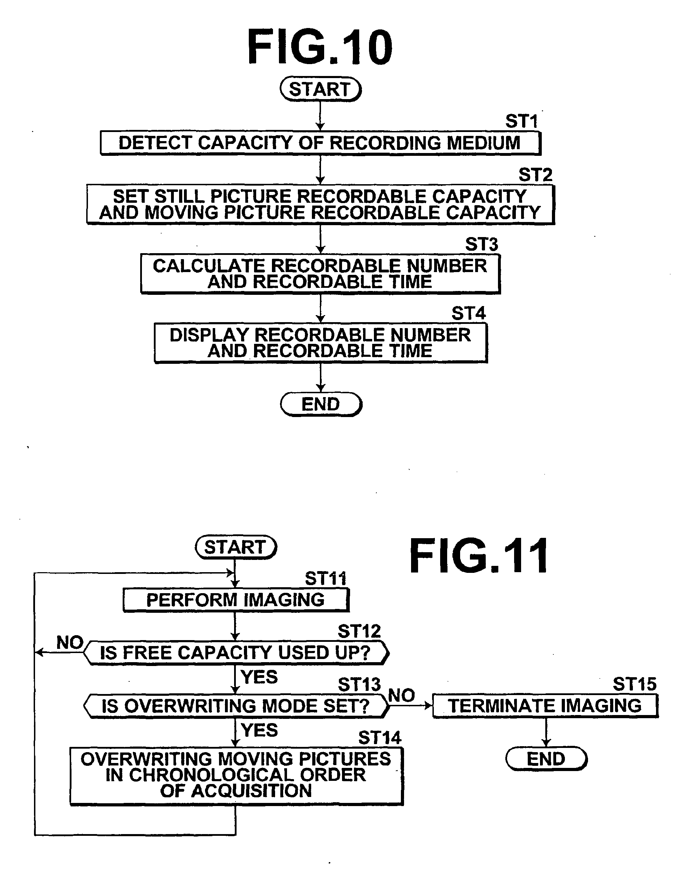

Processing performed in the present embodiment will now be described. Figure 10 is a flowchart illustrating the processing performed in the present embodiment. When a recording medium 35 is attached to the digital camera 1, the processing is initiated by the CPU 40, and the media control section 34 detects a capacity of the recording medium 35 (step ST1) . Then, the number and time setting section 37 sets a still picture recordable capacity and a moving picture recordable capacity according to at least one of the number of recording pixels, image quality imaging mode, and imaging condition of a still picture (step ST2), and calculates a recordable number of still pictures and a recordable time of a moving picture (step ST3). Further, the display control section 27 causes the monitor 28 to display the recordable number and recordable time (step ST4), thereafter the processing is terminated.

As described above, in the present embodiment, a recordable number of still pictures and a recordable time of a moving picture may be set appropriately according to at least one of the number of recording pixels, image quality, imaging mode, and imaging condition of a still picture which affect the size thereof. Further, the user may easily understand the recordable number of still pictures and the recordable time of a moving picture by checking the recordable number of still pictures and the recordable time of a moving picture displayed on the monitor 28.

In the embodiment described above, a capacity of the recording medium 35 is detected by the memory control section 34. Alternatively, a capacity value of the recording medium 35 may be inputted by the user using the operation system 2.

Now, when the digital camera 1 is set to overwriting mode, if the recording size of an entire moving picture obtained by imaging to be recorded on the recording medium 35 exceeds the moving picture recordable capacity, the media control section 34 overwrites old moving pictures with newly obtained moving pictures in the chronological order of acquisition. Hereinafter, the overwriting processing will be described.

Figure 11 is a flowchart of the overwriting processing according to the present embodiment. When an instruction to start imaging a moving picture is given by the user through depression of the release button, the processing is initiated by the CPU 40, and the imaging of the moving picture is performed (step ST11) . The moving picture obtained through the imaging is recorded on the recording medium 35. Then, a determination is made as to whether or not the free capacity in the moving picture recordable capacity is used up (step ST12). If step ST12 is negative, the processing returns to step ST11 to continue the imaging of the moving picture. If step ST12 is positive, a determination is made as to whether or not the digital camera 1 is set to overwriting mode (step ST13). If step ST13 is positive, old moving pictures are overwritten in the chronological order of acquisition (step ST14), and the processing returns to step ST11. If step ST13 is negative, the imaging is terminated (step ST15), thereafter the processing is terminated.

This allows the imaging to be continued although old still picture and moving picture are lost.

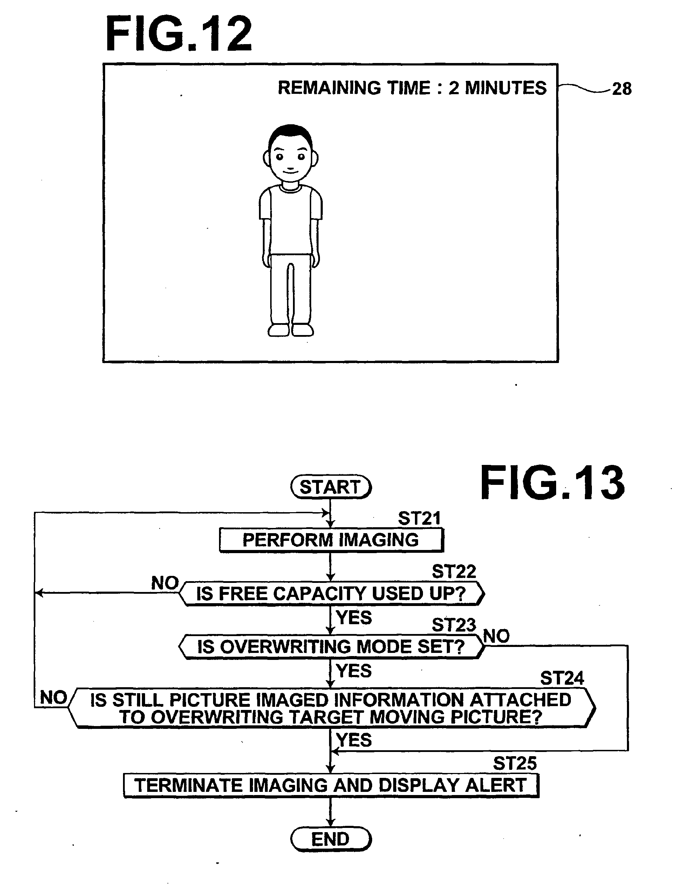

In overwriting mode, it is preferable that a remaining time allowed for the imaging of the moving picture is displayed on the monitor 28 as shown in Figure 12 from a several minutes before the free capacity is used up. In Figure 12, it is shown that the remaining time is two minutes.

The overwriting processing may also be performed when imaging a still picture in the same manner as described above, not just when imaging a moving picture. In the case of still pictures, when the free capacity in the still picture recordable capacity is used up, old still pictures are overwritten in the chronological order of acquisition.

As described above, the digital camera 1 according to the present embodiment has the ability to take a still picture while taking a moving picture, and if a still picture is imaged while taking a moving picture, the still picture imaged information indicating so is attached to the moving picture. Hereinafter, overwriting processing using the still picture imaged information will be described.

Figure 13 is a flowchart of first overwriting processing using the still picture imaged information. When an instruction to start imaging a moving picture is given by the user through depression of the release button, the processing is initiated by the CPU 40, and the imaging of the moving picture is performed (step ST21) . The moving picture obtained through the imaging is recorded on the recording medium 35. Then, a determination is made as to whether or not the free capacity in the moving picture recordable capacity is used up (step ST22). If step ST22 is negative, the processing returns to step ST21 to continue the imaging of the moving picture.

If step ST22 is positive, a determination is made as to whether or not the digital camera 1 is set to overwriting mode (step ST23). If step ST23 is positive, old moving pictures will be overwritten in the chronological order of acquisition, but before that a determination is made as to whether or not the still picture imaged information is attached to a target moving picture to be overwritten (step ST24). If step ST24 is negative, the processing returns to step ST21 to continue the imaging by overwriting the oldest moving picture.

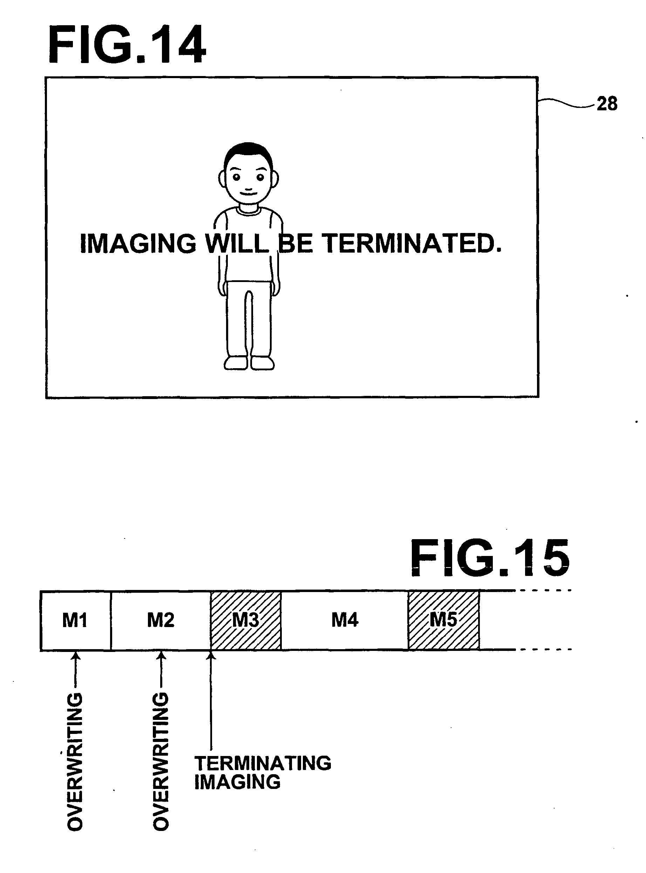

If step ST24 is positive, the imaging is terminated and an alert message of terminating the imaging is displayed on the monitor 28 (step ST25), as shown in Figure 14, then the processing is terminated. When step ST23 is negative, the processing also proceeds to step ST25 to terminate the processing. It is noted that a voice alert may be provided instead of or in addition to the alert message.

Figure 15 schematically illustrates the moving picture recording area of the recording medium 35. Figure 15 shows that a plurality of moving pictures M1, M2, ------ is recorded in time series from left to right. In Figure 15, the moving pictures M3 and M5 are shaded to indicate that the still picture imaged information is attached thereto. Old moving pictures to M1 and M2 without the still picture imaged information are overwritten by the first overwriting processing in the chronological order of acquisition, but the imaging is terminated after the moving picture M2 is overwritten without overwriting the moving picture M3 since it has the still picture imaged information attached thereto, and the alert message is displayed.

Here, the fact that a still picture is imaged while imaging a moving picture means that the moving picture is, in most cases, important to the user. Consequently, still picture imaged information indicating that a still picture is imaged during the imaging is attached to the imaged moving picture. Then, if the still picture imaged information is attached to an overwriting target moving picture, an alert message is displayed and the imaging is terminated, thereby the important moving picture may be protected from being lost by overwriting.

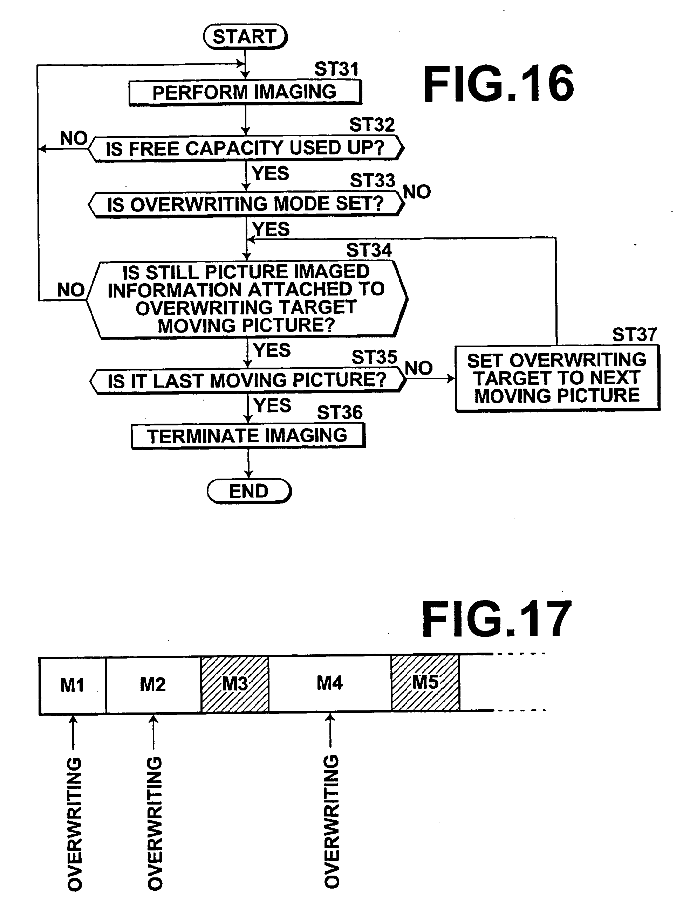

Next, a second overwriting processing will be described. Figure 16 is a flowchart of second overwriting processing using the still picture imaged information. When an instruction to start imaging a moving picture is given by the user through depression of the release button, the processing is initiated by the CPU 40, and the imaging of the moving picture is performed (step ST31). The moving picture obtained through the imaging is recorded on the recording medium 35. Then, a determination is made as to whether or not the free capacity in the moving picture recordable capacity is used up (step ST32). If step ST32 is negative, the processing returns to step ST31 to continue the imaging of the moving picture.

If step ST32 is positive, a determination is made as to whether or not the digital camera 1 is set to overwriting mode (step ST23) . If step ST33 is positive, old moving pictures will be overwritten in the chronological order of acquisition, but before that a determination is made as to whether or not the still picture imaged information is attached to a target moving picture to be overwritten (step ST34). If step ST34 is negative, the processing returns to step ST31 to continue the imaging by overwriting the oldest moving picture.

If step ST34 is positive, a determination is made as to whether or not the overwriting target moving picture is the last old moving picture with the latest acquisition data and time (step ST35). If step ST35 is positive, the imaging is terminated (step ST36) and the processing is terminated. Here, an alert may be issued as in the first overwriting processing.

If step ST35 is negative, the overwriting target is set to the next moving picture (step ST37), and the processing returns to step ST34.

Figure 17 schematically illustrates the moving picture recording area of the recording medium 35. Figure 17 shows that a plurality of moving pictures M1, M2, ------ is recorded in time series from left to right. In Figure 17, the moving pictures M3 and M5 are shaded to indicate that the still picture imaged information is attached thereto. Old moving pictures to M1 and M2 without the still picture imaged information are overwritten by the second overwriting processing in the chronological order of acquisition. After the moving picture M2 is overwritten, however, the moving picture M3 is not overwritten since it has the still picture imaged information attached thereto, and the moving picture M4 with the next old date and time of acquisition and without the still picture imaged information will be overwritten.

In this way, by inhibiting a moving picture with the still picture imaged information attached thereto to be overwritten, the important moving picture is protected from being lost by overwriting.

So far the digital camera 1 according to the embodiment of the present invention has been described. A computer readable recording medium on which a program for causing a computer to function as the means corresponding to the image display control section 27, media control section 34, number and time setting section 37, and information attaching section 38, and to perform the processing illustrated in Figures 10, 11, 13, and 16 is also an embodiment of the present invention.

## Claims

1. An imaging apparatus having an imaging means (10) for obtaining a still picture and a moving picture by imaging, which is capable of imaging a still picture while imaging a moving picture, a removably attachable recording medium (35) for recording the still picture and the moving picture, and a display means (28) for displaying a variety of information, the apparatus comprising:
a number and time setting means (37) for setting both a still picture recordable capacity, which is a recordable capacity for still pictures, and a moving picture recordable capacity, which is a recordable capacity for moving pictures, on the recording medium (35), based on a free capacity of said recording medium and on one of the number of recording pixels, image quality, imaging mode, and imaging condition of the still image, and calculating both a recordable number of still pictures on the recording medium (35) based on the still picture recordable capacity and a recordable time of a moving picture on the recording medium (35) based on the moving picture recordable capacity;
a display control means (27) for displaying both the recordable number of still pictures and the recordable time of a moving picture on the display means (28);
an information attaching means (38) for attaching, when a still picture is imaged while imaging a moving picture, still picture imaged information to the moving picture, which indicates that a still picture is imaged during the imaging of the moving picture; and
a recording control means (34) for overwriting still pictures or moving
pictures recorded on the recording medium with newly obtained still pictures or moving pictures respectively, in the chronological order of acquisition, when the recording size of a still picture obtained by imaging on the recording medium exceeds the still picture recordable capacity, or the recording size of a moving picture obtained by imaging on the recording medium exceeds the moving picture recordable capacity, said recording control means including means for protecting a moving picture having the still picture imaged information attached thereto among those recorded on the recording medium from being overwritten.

2. The imaging apparatus according to claim 1, **characterized in that** the number and time setting means (37) is a means for displaying a plurality of different combinations of recordable capacity for still pictures and for moving pictures on the display means (28), and setting the still picture recordable capacity and the moving picture recordable capacity corresponding to a particular combination selected from the plurality of different combinations.

3. The imaging apparatus according to claim 1, **characterized in that** the recording control means (34) includes means for issuing an alert and terminating the imaging of the moving picture if an overwriting target moving-picture has the still picture imaged information attached thereto when overwriting moving pictures recorded on the recording medium in the chronological order of acquisition.

4. An imaging method for use with an imaging apparatus having an imaging means (10) for obtaining a still picture and a moving picture by imaging, which is capable of imaging a still picture while imaging a moving picture, a removably attachable recording medium (35) for recording the still picture and the moving picture, and a display means (28) for displaying a variety of information, the method comprising the steps of:
setting both a still picture recordable capacity, which is a recordable capacity for still pictures, and a moving picture recordable capacity, which is a recordable capacity for moving pictures, on the recording medium (35), based on a free capacity of the recording medium and on one of the number of recording pixels, image quality, imaging mode, and imaging condition of the still image;
calculating both a recordable number of still pictures on the recording medium (35) based on the still picture recordable capacity and a recordable time of a moving picture on the recording medium (35) based on the moving picture recordable capacity;
displaying both the recordable number of still pictures and the recordable time of a moving picture on the display means (28);
attaching, when a still picture is imaged while imaging a moving picture, still picture imaged information to the moving picture, which indicates that a still picture is imaged during the imaging of the moving picture; and
overwriting still pictures or moving pictures recorded on the recording medium with newly obtained still pictures or moving pictures respectively, in the chronological order of acquisition, when the recording size of a still picture obtained by imaging on the recording medium exceeds the still picture recordable capacity or the recording size of a moving picture obtained by imaging on the recording medium exceeds the moving picture recordable capacity, while protecting a moving picture having the still picture imaged information attached thereto among those recorded on the recording medium from being overwritten.

5. A computer program product for causing a computer to perform an imaging method for use with an imaging apparatus having an imaging means (10) for obtaining a still picture and a moving picture by imaging, a removably attachable recording medium (35) for recording the still picture and the moving picture, and a display means (28) for displaying a variety of information, **characterized in that** the method comprising the steps of:
setting both a still picture recordable capacity, which is a recordable capacity for still pictures, and a moving picture recordable capacity, which is a recordable capacity for moving pictures, on the recording medium (35), based on a free capacity of the recording medium and on one of the number of recording pixels, image quality, imaging mode, and imaging condition of the still image;
calculating both a recordable number of still pictures on the recording medium (35) based on the still picture recordable capacity and a recordable time of a moving picture on the recording medium (35) based on the moving picture recordable capacity;
displaying both the recordable number of still pictures and the recordable time of a moving picture on the display means (28);
attaching, when a still picture is imaged while imaging a moving picture, still picture imaged information to the moving picture, which indicates that a still picture is imaged during the imaging of the moving picture; and
overwriting still pictures or moving pictures recorded on the recording medium with newly obtained still pictures or moving pictures respectively, in the chronological order of acquisition, when the recording size of a still picture obtained by imaging on the recording medium exceeds the still picture recordable capacity or the recording size of a moving picture obtained by imaging on the recording medium exceeds the moving picture recordable capacity, while protecting a moving picture having the still picture imaged information attached thereto among those recorded on the recording medium from being overwritten.

## Patentansprüche

1. Bildgebungsvorrichtung mit einer Bildgebungseinrichtung (10) zum Erhalten eines Standbilds und eines Bewegtbilds durch Abbilden, welche ein Standbild abbilden kann, während sie ein Bewegtbild abbildet, einem entfernbar anbringbaren Aufzeichnungsmedium (35) zum Aufzeichnen des Standbilds und des Bewegtbilds und einer Anzeigevorrichtung (28) zum Anzeigen einer Vielfalt von Information, wobei die Vorrichtung folgendes aufweist:
eine Anzahl- und Zeit-Einstelleinrichtung (37) zum Einstellen von sowohl einer Standbild-Aufzeichnungskapazität, die eine Aufzeichnungskapazität für Standbilder ist, als auch einer Bewegtbild-Aufzeichnungskapazität, die eine Aufzeichnungskapazität für Bewegtbilder ist, auf dem Aufzeichnungsmedium (35) basierend auf einer freien Kapazität des Aufzeichnungsmediums und auf einem von der Anzahl von Aufzeichnungspixeln, der Bildqualität, dem Bildgebungsmodus und einem Bildgebungszustand des Standbilds und zum Berechnen von sowohl einer Aufzeichnungsanzahl von Standbildern auf dem Aufzeichnungsmedium (35) basierend auf der Standbild-Aufzeichnungskapazität als auch einer Aufzeichnungszeit eines Bewegtbilds auf dem Aufzeichnungsmedium (35) basierend auf der Bewegtbild-Aufzeichnungskapazität;
eine Anzeige-Steuereinrichtung (27) zum Anzeigen von sowohl der Aufzeichnungsanzahl von Standbildern als auch der Aufzeichnungszeit eines Bewegtbilds auf der Anzeigeeinrichtung (28);
eine Informations-Anbringungseinrichtung (38) zum Anbringen, wenn ein Standbild abgebildet wird, während ein Bewegtbild abgebildet wird, von Standbild-Abbildungsinformation an das Bewegtbild, welche anzeigt, dass während des Abbildens des Bewegtbilds ein Standbild abgebildet wird; und
eine Aufzeichnungs-Steuereinrichtung (34) zum Überschreiben von Standbildern oder Bewegtbildern, die auf dem Aufzeichnungsmedium abgebildet sind, jeweils mit neu erhaltenen Standbildern oder Bewegtbildern in der chronologischen Reihenfolge einer Erlangung, wenn die Aufzeichnungsgröße eines durch Abbilden auf dem Aufzeichnungsmedium erhaltenen Standbilds die Standbild-Aufzeichnungskapazität übersteigt oder die Aufzeichnungsgröße eines durch Abbilden auf dem Aufzeichnungsmedium erhaltenen Bewegtbilds die Bewegtbild-Aufzeichnungskapazität übersteigt, wobei die Aufzeichnungs-Steuereinrichtung eine Einrichtung zum Schützen eines Bewegtbilds, das die Standbild-Abbildungsinformation daran angebracht hat, unter denjenigen, die auf dem Aufzeichnungsmedium aufgezeichnet sind, davor enthält, überschrieben zu werden.

2. Bildgebungsvorrichtung nach Anspruch 1, **dadurch gekennzeichnet, dass** die Anzahl- und Zeit-Einstelleinrichtung (37) eine Einrichtung zum Anzeigen eiern Vielzahl unterschiedlicher Kombinationen einer Aufzeichnungskapazität für Standbilder und für Bewegtbilder auf der Anzeigeeinrichtung (28) und zum Einstellen der Standbild-Aufzeichnungskapazität und der Bewegtbild-Aufzeichnungskapazität entsprechend einer besonderen Kombination, die aus der Vielzahl unterschiedlicher Kombinationen ausgewählt ist, ist.

3. Bildgebungsvorrichtung nach Anspruch 1, **dadurch gekennzeichnet, dass** die Aufzeichnungs-Steuereinrichtung (34) eine Einrichtung zum Ausgeben eines Alarms und zum Beenden der Bildgebung bzw. des Abbildens des Bewegtbilds, wenn ein Überschreibziel-Bewegtbild die Standbild-Abbildungsinformation daran angebracht hat, wenn auf dem Aufzeichnungsmedium in der chronologischen Reihenfolge aufgezeichnete Bewegtbilder überschrieben werden, enthält.

4. Bildgebungsverfahren zur Verwendung bei einer Bildgebungsvorrichtung mit einer Bildgebungseinrichtung (10) zum Erhalten eines Standbilds und eines Bewegtbilds durch Abbilden, welche ein Standbild abbilden kann, während sie ein Bewegtbild abbildet, einem entfernbar anbringbaren Aufzeichnungsmedium (35) zum Aufzeichnen des Standbilds und des Bewegtbilds und einer Anzeigevorrichtung (28) zum Anzeigen einer Vielfalt von Information, wobei das Verfahren die folgenden Schritte aufweist:
Einstellen von sowohl einer Standbild-Aufzeichnungskapazität, die eine Aufzeichnungskapazität für Standbilder ist, als auch einer Bewegtbild-Aufzeichnungskapazität, die eine Aufzeichnungskapazität für Bewegtbilder ist, auf dem Aufzeichnungsmedium (35) basierend auf einer freien Kapazität des Aufzeichnungsmediums und auf einem von der Anzahl von Aufzeichnungspixeln, der Bildqualität, dem Bildgebungsmodus und einem Bildgebungszustand des Standbilds;
Berechnen von sowohl einer Aufzeichnungsanzahl von Standbildern auf dem Aufzeichnungsmedium (35) basierend auf der Standbild-Aufzeichnungskapazität als auch einer Aufzeichnungszeit eines Bewegtbilds auf dem Aufzeichnungsmedium (35) basierend auf der Bewegtbild-Aufzeichnungskapazität;
Anzeigen von sowohl der Aufzeichnungsanzahl von Standbildern als auch der Aufzeichnungszeit eines Bewegtbilds auf der Anzeigeeinrichtung (28);
wenn ein Standbild abgebildet wird, während ein Bewegtbild abgebildet wird, Anbringen von Standbild-Abbildungsinformation an das Bewegtbild, welche anzeigt, dass während des Abbildens des Bewegtbilds ein Standbild abgebildet wird; und
Überschreiben von Standbildern oder Bewegtbildern, die auf dem Aufzeichnungsmedium abgebildet sind, jeweils mit neu erhaltenen Standbildern oder Bewegtbildern in der chronologischen Reihenfolge einer Erlangung, wenn die Aufzeichnungsgröße eines durch Abbilden auf dem Aufzeichnungsmedium erhaltenen Standbilds die Standbild-Aufzeichnungskapazität übersteigt oder die Aufzeichnungsgröße eines durch Abbilden auf dem Aufzeichnungsmedium erhaltenen Bewegtbilds die Bewegtbild-Aufzeichnungskapazität übersteigt, während ein Bewegtbild, das die Standbild-Abbildungsinformation daran angebracht hat, unter denjenigen, die auf dem Aufzeichnungsmedium aufgezeichnet sind, davor geschützt wird, überschrieben zu werden.

5. Computerprogrammprodukt zum Veranlassen, dass ein Computer ein Bildgebungsverfahren zur Verwendung bei einer Bildgebungsvorrichtung mit einer Bildgebungseinrichtung (10) zum Erhalten eines Standbilds und eines Bewegtbilds durch Abbilden, welche ein Standbild abbilden kann, während sie ein Bewegtbild abbildet, einem entfernbar anbringbaren Aufzeichnungsmedium (35) zum Aufzeichnen des Standbilds und des Bewegtbilds und einer Anzeigevorrichtung (28) zum Anzeigen einer Vielfalt von Information durchführt, wobei das Verfahren die folgenden Schritte aufweist:
Einstellen von sowohl einer Standbild-Aufzeichnungskapazität, die eine Aufzeichnungskapazität für Standbilder ist, als auch einer Bewegtbild-Aufzeichnungskapazität, die eine Aufzeichnungskapazität für Bewegtbilder ist, auf dem Aufzeichnungsmedium (35) basierend auf einer freien Kapazität des Aufzeichnungsmediums und auf einem der Anzahl von Aufzeichnungspixeln, der Bildqualität, dem Bildgebungsmodus und einem Bildgebungszustand des Standbilds;
Berechnen von sowohl einer Aufzeichnungsanzahl von Standbildern auf dem Aufzeichnungsmedium (35) basierend auf der Standbild-Aufzeichnungskapazität als auch einer Aufzeichnungszeit eines Bewegtbilds auf dem Aufzeichnungsmedium (35) basierend auf der Bewegtbild-Aufzeichnungskapazität;
Anzeigen von sowohl der Aufzeichnungsanzahl von Standbildern als auch der Aufzeichnungszeit eines Bewegtbilds auf der Anzeigeeinrichtung (28);
wenn ein Standbild abgebildet wird, während ein Bewegtbild abgebildet wird, Anbringen von Standbild-Abbildungsinformation an das Bewegtbild, welche anzeigt, dass während des Abbildens des Bewegtbilds ein Standbild abgebildet wird; und
Überschreiben von Standbildern oder Bewegtbildern, die auf dem Aufzeichnungsmedium abgebildet sind, jeweils mit neu erhaltenen Standbildern oder Bewegtbildern in der chronologischen Reihenfolge einer Erlangung, wenn die Aufzeichnungsgröße eines durch Abbilden auf dem Aufzeichnungsmedium erhaltenen Standbilds die Standbild-Aufzeichnungskapazität übersteigt oder die Aufzeichnungsgröße eines durch Abbilden auf dem Aufzeichnungsmedium erhaltenen Bewegtbilds die Bewegtbild-Aufzeichnungskapazität übersteigt, während ein Bewegtbild, das die Standbild-Abbildungsinformation daran angebracht hat, unter denjenigen, die auf dem Aufzeichnungsmedium aufgezeichnet sind, davor geschützt wird, überschrieben zu werden.

## Revendications

1. Appareil d'imagerie ayant un moyen d'imagerie (10) pour obtenir une image fixe et une image mobile par imagerie, qui est à même de représenter une image fixe tout en représentant une image mobile, un support d'enregistrement (35) fixable de manière amovible pour enregistrer l'image fixe et l'image mobile, et un moyen d'affichage (28) pour afficher une variété d'informations, l'appareil comprenant :
un moyen de réglage en nombre et en durée (37) pour régler à la fois une capacité enregistrable d'images fixes, qui est une capacité enregistrable pour images fixes, et une capacité enregistrable d'images mobiles, qui est une capacité enregistrable pour images mobiles, sur le support d'enregistrement (35), sur la base d'une capacité libre dudit support d'enregistrement et de l'un ou l'autre du nombre de pixels d'enregistrement, de la qualité de l'image, du mode d'imagerie et de l'état d'imagerie de l'image fixe, et pour calculer à la fois un nombre enregistrable d'images fixes sur le support d'enregistrement (35) sur la base de la capacité enregistrable d'images fixes et une durée enregistrable d'une image mobile sur le support d'enregistrement (35) sur la base de la capacité enregistrable d'images mobiles ;
un moyen de commande d'affichage (27) pour afficher à la fois le nombre enregistrable d'images fixes et la durée enregistrable d'une image mobile sur le moyen d'affichage (28) ;
un moyen d'annexe d'informations (38) pour annexer,
lorsqu'une image fixe est représentée tout en représentant une image mobile, des informations imagées d'images fixes à l'image mobile, ce qui indique qu'une image fixe est représentée au cours de la représentation de l'image mobile ; et
un moyen de commande d'enregistrement (34) pour écraser des images fixes ou des images mobiles enregistrées sur le support d'enregistrement par des images fixes ou des images mobiles nouvellement obtenues, respectivement, dans l'ordre chronologique d'acquisition, lorsque la taille d'enregistrement d'une image fixe obtenue par imagerie sur le support d'enregistrement dépasse la capacité enregistrable d'images fixes ou que la taille d'enregistrement d'une image mobile obtenue par imagerie sur le support d'enregistrement dépasse la capacité enregistrable d'images mobiles, ledit moyen de commande d'enregistrement comprenant des moyens pour protéger une image mobile à laquelle les informations imagées d'images fixes sont annexées parmi celles enregistrées sur le support d'enregistrement à l'égard d'un écrasement.

2. Appareil d'imagerie selon la revendication 1, **caractérisé en ce que** le moyen de réglage en nombre et en durée (37) est un moyen pour afficher une pluralité de différentes combinaisons de capacité enregistrable pour images fixes et pour images mobiles sur le moyen d'affichage (28) et pour régler la capacité enregistrable d'images fixes et la capacité enregistrable d'images mobiles correspondant à une combinaison particulière sélectionnée dans la pluralité de différentes combinaisons.

3. Appareil d'imagerie selon la revendication 1, **caractérisé en ce que** le moyen de commande d'enregistrement (34) comprend des moyens pour délivrer une alerte et terminer l'imagerie de l'image mobile si une image mobile cible d'écrasement a les informations imagées d'images fixes qui lui sont annexées lors de l'écrasement d'images mobiles enregistrées sur le support d'enregistrement dans l'ordre chronologique d'acquisition.

4. Procédé d'imagerie pour usage avec un appareil d'imagerie ayant un moyen d'imagerie (10) pour obtenir une image fixe et une image mobile par imagerie, qui est capable de représenter une image fixe tout en représentant une image mobile, un support d'enregistrement (35) fixable de manière amovible pour enregistrer l'image fixe et l'image mobile, et un moyen d'affichage (28) pour afficher une variété d'informations, le procédé comprenant les étapes consistant à :
régler à la fois une capacité enregistrable d'images fixes, qui est une capacité enregistrable pour images fixes, et une capacité enregistrable d'image mobiles, qui est une capacité enregistrable pour images mobiles, sur le support d'enregistrement (35), sur la base d'une capacité libre du support d'enregistrement et de l'un ou l'autre du nombre de pixels d'enregistrement, de la qualité de l'image, du mode d'imagerie et de l'état d'imagerie de l'image fixe ;
calculer à la fois un nombre enregistrable d'images fixes sur le support d'enregistrement (35) sur la base de la capacité enregistrable d'images fixes et d'une durée enregistrable d'une image mobile sur le support d'enregistrement (35) sur la base de la capacité enregistrable d'images mobiles ;
afficher à la fois le nombre enregistrable d'images
fixes et la durée enregistrable d'une image mobile sur le moyen d'affichage (28) ;
annexer, lorsqu'une image fixe est représentée tout en
représentant une image mobile, des informations imagées d'images fixes à l'image mobile, ce qui indique qu'une image fixe est représentée au cours de l'imagerie de l'image mobile ; et
écraser des images fixes ou des images mobiles
enregistrées sur le support d'enregistrement par des images fixes ou des images mobiles nouvellement obtenues, respectivement, dans l'ordre chronologique d'acquisition, lorsque la taille d'enregistrement d'une image fixe obtenue par représentation sur le support d'enregistrement dépasse la capacité enregistrable d'images fixes ou que la taille d'enregistrement d'une image mobile obtenue par représentation sur le support d'enregistrement dépasse la capacité enregistrable d'images mobiles tout en protégeant une image mobile à laquelle sont annexées les informations imagées d'images fixes parmi celles enregistrées sur le support d'enregistrement à l'égard d'un écrasement.

5. Produit de programme informatique pour amener un ordinateur à effectuer un procédé d'imagerie pour usage avec un appareil d'imagerie ayant un moyen d'imagerie (10) pour obtenir une image fixe et une image mobile par imagerie, un support d'enregistrement (35) fixable de manière amovible pour enregistrer l'image fixe et l'image mobile, et un moyen d'affichage (28) pour afficher une variété d'informations, **caractérisé en ce que** le procédé comprend les étapes consistant à :
régler à la fois une capacité enregistrable d'images
fixes, qui est une capacité enregistrable pour images fixes, et une capacité enregistrable d'image mobiles, qui est une capacité enregistrable pour images mobiles, sur le support d'enregistrement (35), sur la base d'une capacité libre du support d'enregistrement et, respectivement, de l'un ou l'autre du nombre de pixels d'enregistrement, de la qualité de l'image, du mode d'imagerie et de l'état d'imagerie de l'image fixe ;
calculer à la fois un nombre enregistrable d'images
fixes sur le support d'enregistrement (35) sur la base de la capacité enregistrable d'images fixes et d'une durée enregistrable d'une image mobile sur le support d'enregistrement (35) sur la base de la capacité enregistrable d'images mobiles ;
afficher à la fois le nombre enregistrable d'images
fixes et la durée enregistrable d'une image mobile sur le moyen d'affichage (28) ;
annexer, lorsqu'une image fixe est représentée tout en
représentant une image mobile, des informations imagées d'images fixes à l'image mobile, ce qui indique qu'une image fixe est représentée au cours de l'imagerie de l'image mobile ; et
écraser des images fixes ou des images mobiles
enregistrées sur le support d'enregistrement par des images fixes ou des images mobiles nouvellement obtenues, respectivement, dans l'ordre chronologique d'acquisition, lorsque la taille d'enregistrement d'une image fixe obtenue par représentation sur le support d'enregistrement dépasse la capacité enregistrable d'images fixes ou que la taille d'enregistrement d'une image mobile obtenue par représentation sur le support d'enregistrement dépasse la capacité enregistrable d'images mobiles tout en protégeant une image mobile à laquelle sont annexées les informations imagées d'images fixes parmi celles enregistrées sur le support d'enregistrement à l'égard d'un écrasement.
